# EUROPÄISCHE PATENTANMELDUNG

(11) **EP 2 319 284 A1**
(43) Veröffentlichungstag der Anmeldung: **11.05.2011**
(21) Anmeldenummer: 10008794.9
(22) Anmeldetag: 24.08.2010
(51) Int. Cl.: A01B 33/08

(54) **Bearbeitungsgerät für landwirtschaftliche Flächen, insbesondere Kreiselegge**

(30) Priorität: 06.11.2009 DE 202009015104 U
(71) Anmelder: Rögelberg Holding GmbH & Co. KG, 49716 Meppen (DE)
(72) Erfinder: Seggering, Manfred, 49744 Geeste-Dalum (DE); Pleus, Karlheinz, 49779 Oberlangen (DE)
(74) Vertreter: Wischmeyer, André

(57) **Zusammenfassung**

Bearbeitungsgerät für landwirtschaftliche Flächen, insbesondere Kreiselegge, mit einem Getriebe (1) und einem Räderkasten (2), über den eine Mehrzahl von unterhalb einer Bodenwand (4) des Räderkastens (2) angeordneten Bearbeitungselementen gleichzeitig antreibbar sind, wobei das an einer Deckenwand (6) des Räderkastens (2) angeordnete Getriebe (1) mittels einer einenends im Getriebe (1) gelagerten Abtriebswelle (13) zur Weiterleitung einer Antriebskraft in den Räderkasten (2) ausgebildet ist, und wobei eine Mehrzahl von im Räderkasten (2) gelagerten Zahnrädern (3) antriebsmäßig mit der Abtriebswelle (13) verbunden sind, wobei die Abtriebswelle (13) anderenends über ein an der Bodenwand (4) des Räderkastens angeordnetes Lager (21,32) gelagert ist.

## Beschreibung

Die vorliegende Erfindung betrifft ein Bearbeitungsgerät für landwirtschaftliche Flächen, insbesondere eine Kreiselegge, mit einem Getriebe und einem Räderkasten, über den eine Mehrzahl von unterhalb einer Bodenwand des Räderkastens angeordneten Bearbeitungselementen gleichzeitig antreibbar sind, wobei das an einer Deckenwand des Räderkastens angeordnete Getriebe mittels einer einenends im Getriebe gelagerten Abtriebswelle zur Weiterleitung einer Antriebskraft in den Räderkasten ausgebildet ist, und wobei eine Mehrzahl von im Räderkasten gelagerten Zahnrädern antriebsmäßig vorzugsweise über ein Abtriebsritzel mit der Abtriebswelle verbunden sind.

In einem nach der EP 1 574 120 A1 bekannten Stand der Technik ragt die Abtriebswelle des Getriebes einer Kreiselegge in den Räderkasten bzw. die Getriebewanne hinein, wobei die Abtriebswelle des Getriebes an ihrem bezüglich einer Längsrichtung der Achse oberen Ende gelagert ist. Der aus dünnem Blech aufgebaute Räderkasten der Kreiselegge lässt eine zu große Relativbewegung des Getriebes gegenüber dem Räderkasten zu, was eine weitere Abstützung der Abtriebswelle bzw. des Getriebes notwendig macht. Die vorgeschlagene Abstützung des Getriebehalses an der Deckenwand des Räderkastens ist jedoch oftmals nicht ausreichend, die Bewegung des Getriebes gegenüber und mit der Deckenwand ausreichend zu minimieren. Des Weiteren ist eine solche fliegende Lagerung aufgrund der notwendigen Dimensionierungen des Lagers und des Getriebehalses teuer.

Aufgabe der vorliegenden Erfindung ist es daher, den bekannten Stand der Technik dahingehend zu verbessern, dass die Anordnung von Getriebe und Räderkasten langfristig einen sicheren Sitz der Abtriebswelle gewährleistet.

Die Aufgabe wird gelöst durch einen Gegenstand gemäß Anspruch 1. Vorteilhafte Ausgestaltungen sind den Unteransprüchen sowie der nachfolgenden Beschreibung zu entnehmen.

Erfindungsgemäß ist vorgesehen, dass das Bearbeitungsgerät für landwirtschaftliche Flächen, insbesondere eine Kreiselegge, eine aus dem Getriebegehäuse herausführende Abtriebswelle aufweist, die an ihrem der gehäuseseitigen Lagerung entgegengesetzten Ende über ein an der Bodenwand des Räderkastens angeordnetes Lager gelagert ist. Entgegen dem herkömmlichen Stand der Technik ist die Abtriebswelle des Getriebes nicht komplett im Getriebegehäuse gelagert, sondern auch am Räderkasten und macht zumindest den unteren Teil des Räderkastens quasi zu einem Teil des Getriebegehäuses. Durch die Anordnung des eigentlichen Getriebegehäuses an der Deckenwand einerseits sowie die Lagerung der Abtriebswelle an der Bodenwand des Räderkastens andererseits ist die Abtriebswelle langfristig ausreichend stabil gelagert. Relativbewegungen zwischen Abtriebsritzel bzw. Abtriebswelle und Rädern des Räderkastens, die aus einer ausschließlichen Belastung der Deckenwand des Räderkastens resultierten, werden minimiert, da zusätzlich die Bodenwand des Räderkastens stabilisiert.

Die Deckenwand und die Bodenwand des Räderkastens müssen nicht notwendigerweise plattenförmig bzw. flach ausgebildet sein, sie können auch einteilig bzw. einstückig miteinander verbunden und im Querschnitt gekrümmt ausgebildet sein.

Ein etwaiger, in das Getriebe hineinragender, länglicher Teil des Getriebegehäuses (Getriebehals) kann kürzer ausgebildet werden, was das Getriebe günstiger herstellbar macht. Außerdem können die im Räderkasten angeordneten Zahnräder höher gebaut und/oder näher an der Deckenwand angeordnet werden.

Vorzugsweise ist die in den Räderkasten hinein- und gegebenenfalls hindurchragende Abtriebswelle über je ein Lager auf jeder Seite des Abtriebsritzels der Abtriebwelle (in Längsrichtung der Welle) abgestützt. Eine fliegende Lagerung in der Getriebenabe/dem Getriebehals entfällt, und die auf die Lager der Abtriebswelle wirkenden Kräfte beim Betrieb eines Bodenbearbeitungsgeräts werden zu beiden Seiten entlang der Längsrichtung der Abtriebswelle hin aufgefangen, was eine stabilere Lagerung der Welle bewirkt.

Vorteilhafterweise ist die Abtriebswelle innerhalb eines vorzugsweise einstückig mit der Bodenwand des Räderkastens ausgebildeten Flansches bzw. einer einstückig mit dem Räderkasten ausgebildeten Nabe gelagert, was einen besonders guten Sitz der Abtriebswelle bei einer entsprechend genauen Ausbildung des Räderkastens bewirkt. Das bodenwandseitige Lager der Abtriebswelle kann sowohl direkt als auch mittelbar über Befestigungsflansche, Lagerflansche oder dgl. an der Bodenwand angeordnet sein.

Bei einem Räderkasten mit größeren Fertigungstoleranzen kann bei einer erfindungsgemäßen Weiterbildung eines Bearbeitungsgeräts zur Positionierung der Abtriebswelle im Räderkasten vor einer Befestigung des Getriebes an dem Räderkasten ein vorzugsweise aus Kunststoff bestehender Stützring vorgesehen sein. Dieser dient allein einer Ausrichtung der Abtriebswelle relativ zum Getriebegehäuse und somit der Positionierung des Lagers an der Bodenwand des Getriebes. Er besitzt keine Lagerfunktion, d.h. die Abtriebswelle kann mit geringem Spiel in dem Stützring angeordnet sein. Bei Festlegung der Abtriebswelle über ein Lager an der Bodenwand des Getriebes verliert er seine stützende Funktion.

Üblicherweise ist die Abtriebswelle durch Anordnung des Getriebes an der Deckenwand des Räderkastens nahezu vertikal zu der Längserstreckung des Räderkastens angeordnet. Zum Ausgleich fertigungsbedingter Toleranzen kann es jedoch vorteilhaft sein, bodenwandseitig die Abtriebswelle mittels eines winkeleinstellbaren Lagers zu lagern. Hierbei kann es sich beispielsweise um eine Pendelkugellager oder andere ausrichtungstolerante oder -einstellbare Lager handeln.

In einer vorteilhaften weil einfachen Ausbildung der Lagerung an der Bodenwand des Räderkastens weist die erfindungsgemäße Vorrichtung einen insbesondere gedrehten Lagerflansch auf, der auf die Bodenwand des Räderkastens aufgeflanscht wird.

Zum Ausgleichen von Toleranzen kann die Festlegung des Lagers einer erfindungsgemäßen Kreiselegge beispielsweise ein mit ausreichend Spiel versehenen Langlöchern, Führungen oder dgl. in der Bodenwand erfolgen.

Besonders einfach ist eine Befestigung bzw. Lagerung der Abtriebswelle, bei der das Lager auf der Unterseite der Bodenwand angeordnet ist. So kann der Zusammenbau des Getriebes mit dem Räderkasten einfach erfolgen.

In einer weiteren vorteilhaften Ausbildung der Erfindung kann das untere, d.h. bodenwandseitige Lager der Abtriebswelle auch auf der inneren, d.h. im Räderkasten befindlichen, oberen Bodenwandseite des Räderkastens angeordnet sein. Die Unterseite des Räderkastens verbleibt somit glattflächiger, was zu geringeren Verschmutzungen beim Betrieb des Gerätes führt.

Um die nachträgliche, d.h. nach Befestigung des Getriebes an dem Räderkasten erfolgende Lagerung der Abtriebswelle zu vereinfachen, ist es erfindungsgemäß weiterhin vorteilhaft, das bodenwandseitige Lager der Abtriebswelle ausschließlich zur Abstützung von quer zur Längserstreckung der Abtriebswelle auftretenden Kräften auszubilden. Gewissermaßen handelt es sich somit um eine in den Räderkasten hinein- bzw. ggf. auch durch diesen hindurchhängende Abtriebswelle. Die in Längsrichtung der Abtriebswelle auftretenden Kräfte werden beispielsweise über Schulter- und Stützringe am oberen Lager im Getriebegehäuse abgestützt. Die Bodenwand wird somit nur in Richtung ihrer Längserstreckung belastet, was eine stabile Lagerung bewirkt.

Bodenwandseitig können Stellmittel zur angepassten Positionierung und/oder Festlegung des bodenwandseitigen Lagers vorgesehen sein, wobei es sich um bereits erwähnte Langlöcher, Führungen oder andere eine variable Festlegung des Lagers erlaubende Mittel handeln kann.

Weitere Vorteile und Einzelheiten der Erfindung lassen sich der nachfolgenden Figurenbeschreibung entnehmen. Schematisch dargestellt zeigt:
- Fig. 1: eine erfindungsgemäße Vorrichtung in einer Teilansicht,
- Fig. 2: eine weitere erfindungsgemäße Vorrichtung in einer Teilansicht,
- Fig. 3: eine weitere erfindungsgemäße Vorrichtung in einer Teilansicht.

Gleich oder ähnlich wirkende Teile sind - sofern dienlich - mit identischen Bezugsziffern versehen. Einzelne technische Merkmale der nachfolgend beschriebenen Ausführungsbeispiele können auch mit den Merkmalen der vorbeschriebenen Ausführungsbeispiele zu erfindungsgemäßen Weiterbildungen führen.

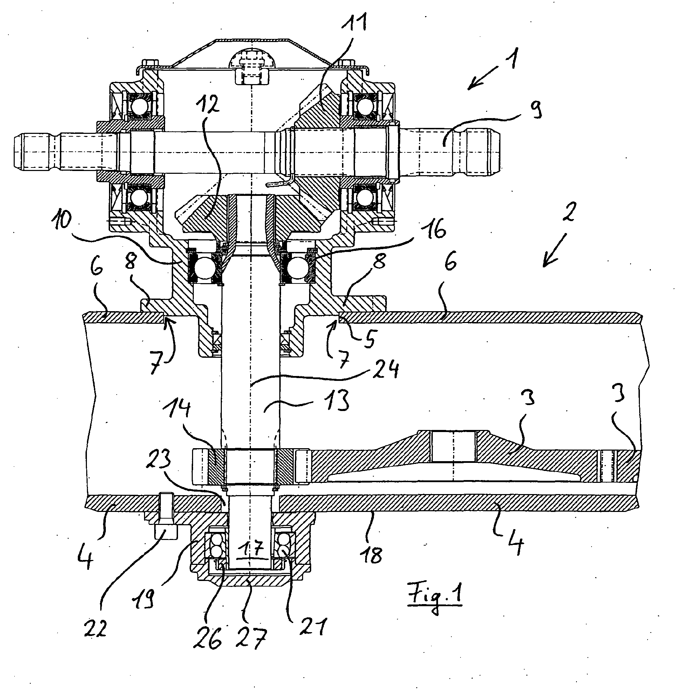

Ein erfindungsgemäßes Bearbeitungsgerät für landwirtschaftliche Flächen ist gemäß Fig. 1 als Kreiselegge ausgebildet. Diese weist ein allgemein mit 1 bezeichnetes Getriebe auf, welches mit einem Räderkasten 2 verbunden ist. Die erfindungsgemäße Kreiselegge weist über eine Mehrzahl von im Räderkasten 2 gelagerten Zahnrädern 3 antreibbare und nicht näher dargestellte Bearbeitungselemente auf. Diese sind unterhalb einer Bodenwand 4 des Räderkastens 2, d.h. zum in der Fig. 1 unteren Rand der Figur hin angeordnet. Das Getriebe 1 ist an einer Deckenwand 6 des Räderkastens befestigt, wobei sich das Getriebegehäuse mit einer Schulter 7 eines Getriebegehäuseflansches 8 passgenau an dem Rand 5 einer Ausnehmung der Deckenwand 4 abstützt. Eine-im Getriebegehäuse gelagerte Antriebswelle 9 leitet die vorzugsweise von einer Zapfwelle eines Schleppers übertragene Antriebskraft über ein Kegelrad 11 auf ein Kegelrad 12 einer Antriebswelle 13 weiter. Über ein auf der Abtriebswelle 13 befindliches, als Stirnrad ausgebildetes Abtriebsritzel 14 wird die Antriebskraft auf die Zahnräder 3 weitergeleitet.

Die Abtriebswelle 13 ist in der Figur im Bereich ihres oberen Endes unterhalb des Kegelrades 12 im Getriebegehäuse 10 mittels eines Lagers 16 gelagert. Hierbei handelt es sich vorzugsweise um ein Rillenkugellager, welches die Abtriebswelle umfangsseitig begrenzt. Im Bereich Ihres unteren Endes 17 ist die Abtriebswelle 13 erfindungsgemäß über einen Befestigungsflansch 19, der ein Lager 21 hält, an einer Unterseite 18 der Bodenwand 4 befestigt. Der Befestigungsflansch 19 ist beispielsweise über Befestigungsmittel 22 an der Bodenwand 4 verschraubt.

Die Abtriebswelle 13 ragt für ihre Festlegung an der Unterseite 18 der Bodenwand 4 durch eine Ausnehmung 23 durch die Bodenwand 4 in ausreichendem Maße hindurch. Die Ausnehmung 23 ist ausreichend groß, so dass auch geringfügige Schrägstellungen der Welle, d.h. eine nicht exakt vertikale Positionierung einer Längsmittelachse 24 zur Längserstreckung der Bodenwand 4 oder der Deckenwand 6 ermöglicht. Dennoch ist die Abtriebswelle 13 über das winkeleinstellbare Lager 21 sicher gelagert. Der als Lagerkasten ausgebildete Befestigungsflansch 19 kann zweigeteilt sein, so dass sowohl nach als auch vor Befestigung des Befestigungsflansches 19 an der Bodenwand 4 beispielsweise mittels einer Wellenmutter 26 eine Einstellbarkeit des Lagers 21 gegeben ist. Anschließend ist eine Abdeckung 27 zum Abdecken des Lagers 21 verwendbar.

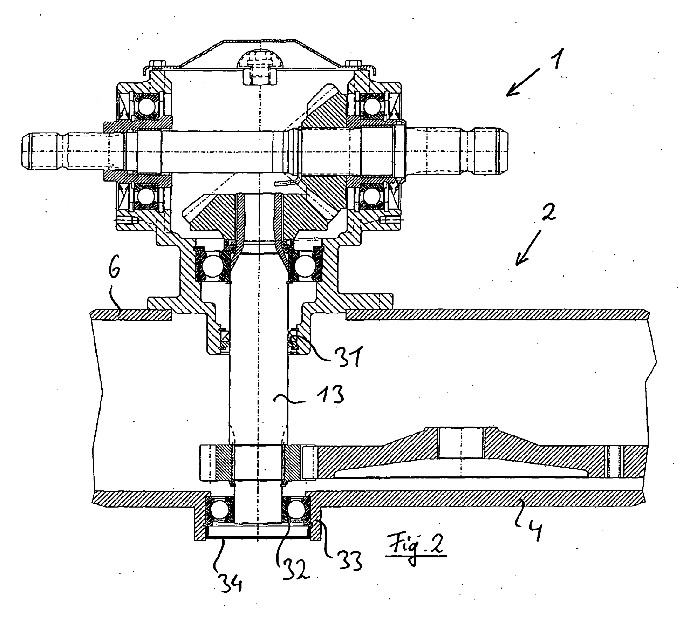

Ebenso wie die erfindungemäße Kreiselegge gemäß Fig. 1 weist die erfindungsgemäße Kreiselegge der Fig. 2 einen vorzugsweise aus Kunststoff bestehenden Stützring 31 auf, der zur Ausrichtung der Abtriebswelle 13 vor Einbringen und Lagern der Abtriebswelle 13 im Räderkasten dient. Dieser Kunststoffring hat sowohl für den Betrieb der Kreiselegge wie auch vorher keine lagernde Funktion, sondern dient lediglich der ungefähren Ausrichtung der Abtriebswelle. Hierfür kann die Abtriebswelle sogar mit Spiel gegenüber dem Stützring 31 versehen sein.

Die Abtriebswelle 13 gemäß Fig. 2 ist über ein Lager 32 in einem Flansch 33 der Bodenwand 4 gelagert. Diese erfindungsgemäße Ausführung ist insbesondere bei mit hinreichender Passgenauigkeit gefertigten Räderkästen 2 vorteilhaft. Um Verschmutzungen von außen von dem Lager 32 fernzuhalten, ist eine Abdeckkappe 34 in den Flansch 33 geschraubt oder gesteckt.

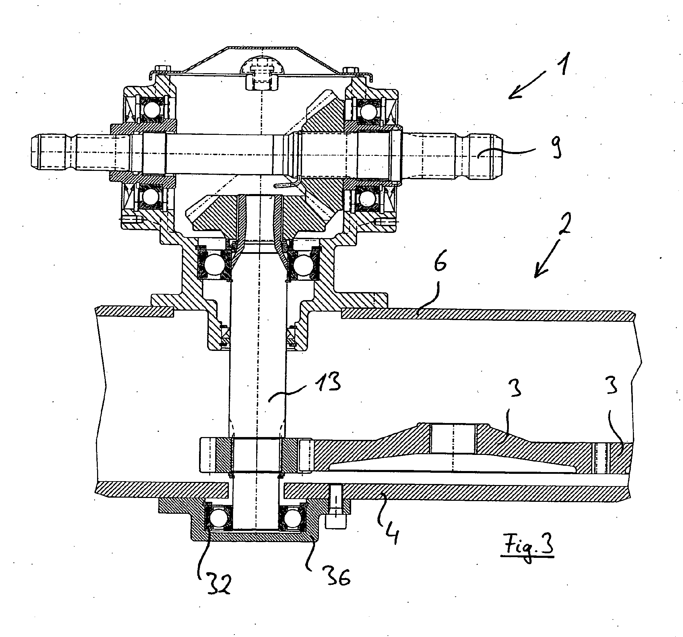

Gemäß Fig. 3 kann eine erfindungsgemäße Kreiselegge auch eine Lagerung der Abtriebswelle 13 mittels eines gedrehten Lagerflansches 36 aufweisen, welcher an der Bodenwand 4 befestigt ist. Innerhalb des Lagerflansches 36 ist die Abtriebswelle 13 wiederum über ein beispielsweise als Kugellager ausgebildetes Lager 32 gelagert.

Aus dem Vergleich der Figuren 1 bis 3 ergibt sich, dass die Abtriebswelle 13 sowohl direkt an der Bodenwand 4 (Fig. 2) oder über Flansche (Fig. 1 und 3) gelagert werden kann.

## Patentansprüche

1. Bearbeitungsgerät für landwirtschaftliche Flächen, insbesondere Kreiselegge, mit einem Getriebe (1) und einem Räderkasten (2), über den eine Mehrzahl von unterhalb einer Bodenwand (4) des Räderkastens (2) angeordneten Bearbeitungselementen gleichzeitig antreibbar sind, wobei das an einer Deckenwand (6) des Räderkastens (2) angeordnete Getriebe (1) mittels einer einenends im Getriebe (1) gelagerten Abtriebswelle (13) zur Weiterleitung einer Antriebskraft in den Räderkasten (2) ausgebildet ist, und wobei eine Mehrzahl von im Räderkasten (2) gelagerten Zahnrädern (3) antriebsmäßig mit der Abtriebswelle (13) verbunden sind, **dadurch gekennzeichnet, dass** die Abtriebswelle (13) anderenends über ein an der Bodenwand (4) des Räderkastens angeordnetes Lager (21,32) gelagert ist.

2. Bearbeitungsgerät nach Anspruch 1, **dadurch gekennzeichnet, dass** ein Abtriebsritzel (14) der Abtriebswelle (13) zwischen Lagern (16,21,32) der Abtriebswelle (13) angeordnet ist.

3. Bearbeitungsgerät nach einem der vorherigen Ansprüchen, **dadurch gekennzeichnet, dass** die Abtriebswelle (13) innerhalb eines vorzugsweise einstückig mit der Bodenwand (4) verbundenen Flansches (33) gelagert ist.

4. Bearbeitungsgerät nach einem der vorherigen Ansprüche, **dadurch gekennzeichnet, dass** zur Positionierung der Abtriebswelle (13) im Räderkasten (2) vor einer Befestigung des Getriebes (1) an dem Räderkasten (2) ein vorzugsweise aus Kunststoff bestehender Stützring (31) vorgesehen ist.

5. Bearbeitungsgerät nach einem der vorherigen Ansprüche, **gekennzeichnet durch** ein bodenwandseitiges, winkeleinstellbares Lager (21) der Abtriebswelle (13).

6. Bearbeitungsgerät nach einem der vorherigen Ansprüche, **gekennzeichnet durch** einen insbesondere gedrehten Lagerflansch (36) für das an der Bodenwand (4) des Räderkastens (2) angeordnete Lager (32).

7. Bearbeitungsgerät nach einem der vorherigen Ansprüche, **dadurch gekennzeichnet, dass** das bodenwandseitige Lager (32) auf der Unterseite (18) der Bodenwand (4) des Räderkastens (2) angeordnet ist.

8. Bearbeitungsgerät nach einem der vorherigen Ansprüche, **dadurch gekennzeichnet, dass** das bodenwandseitige Lager auf der Oberseite der Bodenwand (4) des Räderkastens (2) angeordnet ist.

9. Bearbeitungsgerät nach einem der vorherigen Ansprüche, **dadurch gekennzeichnet, dass** das bodenwandseitige Lager (21,32) der Abtriebswelle (13) diese nur quer zur Längserstreckung der Abtriebswelle (13) abstützt.

10. Bearbeitungsgerät nach einem der vorherigen Ansprüche, **gekennzeichnet durch** Stellmittel zur angepassten Positionierung und/oder Festlegung des bodenwandseitigen Lagers (31,32).
